# EUROPÄISCHE PATENTSCHRIFT

(11) **EP 3 178 860 B1**
(45) Veröffentlichungstag und Bekanntmachung des Hinweises auf die Patenterteilung: **28.11.2018**
(21) Anmeldenummer: 15199189.0
(22) Anmeldetag: 10.12.2015
(51) Int. Cl.: C08G 18/75, C08G 18/08, C08G 18/10, C08G 18/24, C09D 175/14, C08G 18/32, C08G 18/34, C08G 18/36, C08G 18/12, C09F 9/00, C08G 18/67

(54) **OXIDATIV TROCKNENDE POLYURETHANDISPERSIONEN MIT EINER BESONDERS HOHEN CHEMIKALIENRESISTENZ**
OXIDATIVELY DRYING POLYURETHANE DISPERSIONS WITH A PARTICULARLY HIGH RESISTANCE TO CHEMICALS
DISPERSIONS DE POLYURÉTHANE SÉCHANT PAR OXYDATION AYANT UNE RÉSISTANCE PARTICULIÈREMENT ÉLEVÉE AUX PRODUITS CHIMIQUES

(43) Veröffentlichungstag der Anmeldung: 14.06.2017
(73) Patentinhaber: Covestro Deutschland AG, 51373 Leverkusen (DE)
(72) Erfinder: Ludewig, Michael, 51519 Odenthal (DE); Almato, Maria, 08031 Barcelona (ES); Nazaran, Pantea, 51061 Köln (DE); Tejada, Eva, 08100 Mollet del Valles, Barcelona (ES)
(74) Vertreter: Levpat

(56) Entgegenhaltungen:
- EP-A1- 1 198 487
- WO-A1-02/32980
- DE-A1-102010 009 896

## Beschreibung

Die vorliegende Erfindung betrifft hydrophilierte Polyurethane mit einem besonders hohen Gehalt an hydroxyfunktionellen, ungesättigten Triglyceriden, ein Verfahren zur Herstellung von darauf basierenden Polyurethandispersionen, die Verwendung der Dispersionen als Bindemittel in oxidativ trocknenden Lacken mit besonders hoher Chemikalienbeständigkeit, sowie Gegenstände und Substrate, die mit diesen Lacken beschichtet sind.

Wässrige Beschichtungsmittel sind als Ersatz für lösemittelhaltige Systeme mittlerweile etabliert. Eine wichtige Klasse wässriger Bindemittel sind die Polyurethan-Dispersionen (D.Dieterich, Prog. Org. Coatings 9, 281(1981)), die die wichtigsten Eigenschaften der Beständigkeit gegenüber Chemikalien und mechanischer Belastung vereinen. Speziell im Bereich der Beschichtung mechanisch stark beanspruchter Flächen ist die Verwendung von Polyurethandispersionen daher von Vorteil.

Speziell hinsichtlich der Chemikalienresistenz kann eine weitere Verbesserung erreicht werden, indem die Beschichtungen chemisch vernetzt werden. Ein Weg dies zu erreichen ist die Vernetzung von OH- oder NH-Gruppen tragenden wässrigen Bindemitteln durch hydrophilierte Polyisocyanate (EP-B-0540985). Solche wässrigen 2k-Polyurethanlacke erreichen ein sehr hohes Eigenschaftsniveau, allerdings ist das Applikationsverfahren vergleichsweise aufwändig und kann, vor allem bei handwerklicher Verarbeitung, ein Hindernis darstellen.

Ein weiterer Weg ist die Verwendung von UV-vernetzbaren Polyurethandispersionen, mit denen ebenfalls exzellente Eigenschaften erreicht werden können. Solche Bindemittel enthalten in der Regel aktivierte Doppelbindungen, wie z.B. Acrylat-Gruppen (EP-B-0753531) und sind vor allem bei der industriellen Beschichtung flächiger Substrate etabliert. Allerdings ist es nicht in allen Anwendungen praktikabel, nach der Applikation eine Vernetzung mit aktinischer Strahlung vorzunehmen.

Ein ebenfalls etablierter Weg ist es daher, Polyurethandispersionen mit nicht-aktivierten Doppelbindungen zu verwenden, die lufttrocknende Eigenschaften haben (Advances in Urethane Science and Technology, K.C. Frisch, D. Klempner (HRSG.) Bd. 10, S121ff (1987)). Beschichtungen aus solchen Bindemitteln vernetzen durch Reaktion mit Luftsauerstoff (auto-oxidative Vernetzung) und können daher einkomponentig angewandt werden und vernetzen ohne weiteres Zutun des Verarbeiters.

Solche Urethangruppen und lufttrocknende Bausteine enthaltende Dispersionen sind weiterhin beschrieben in EP-A-0017199, EP-B-0379007, WO199719120, DE-A-4416336, US-A-5039732 und JP-A-6340842. Nachteilig an diesen auto-oxidativ vernetzbaren Polyurethandispersionen ist jedoch, dass die mechanischen Eigenschaften des Lackfilms nicht das hohe Niveau der rein physikalisch trocknenden Polyurethandispersionen erreichen. Dies zeigt sich z.B. an einer verschlechterten Abriebbeständigkeit.

Eine Verbesserung der Abriebbeständigkeit kann durch Systeme erreicht werden, die auf modifizierten, OH-funktionellen Triglyceriden basieren. Ein derartiges wässriges Polyurethan-Bindemittel wird in der EP-B-0709414 beschrieben. Dabei wird dehydratisiertes Rizinusöl verwendet. Durch die Dehydratisierung werden OH-Gruppen der Ricinolsäure in Doppelbindungen umgewandelt, so dass die Summe der OH-Gruppen und Doppelbindungen immer gleich bleibt.

Flexibler ist daher das in der EP-B-1198487 vorgestellte Verfahren, bei dem das Rizinusöl mit einem anderen, nicht funktionellen, Triglycerid gemischt wird und dann einer Umesterung unterworfen wird. Polyurethandispersionen, die auf diesem Verfahren beruhen, haben bereits sehr gute Eigenschaften hinsichtlich mechanischer und chemischer Beständigkeit und lassen sich sehr gut z.B. in hochwertigen Bodenbeschichtungen einsetzen. Allerdings erreichen sie noch nicht das besonders hohe Eigenschaftsniveau von strahlungshärtbaren Polyurethandispersionen oder 2k-Polyurethandispersionen, die jeweils eine deutlich höhere Vernetzungsdichte erreichen.

Aufgabe der vorliegenden Erfindung war es daher, Polyurethane für die Verwendung in oxidativ trocknenden Polyurethandispersionen bereitzustellen, die eine deutlich gesteigerte Chemikalienresistenz aufweisen, ohne dabei die sehr guten mechanischen Eigenschaften zu verlieren.

Ausgehend von EP-B-1198487 wird diese Aufgabe durch Polyurethane gelöst, die einerseits einen besonders hohen Anteil an oxidativ trocknenden Triglyceriden und andererseits einen hohen Anteil an cycloaliphatischen Diisocyanaten und Kettenverlängerern aufweisen.

Gegenstand der vorliegenden Erfindung sind Polyurethane A), die mindestens als Aufbaukomponenten
A1) 40 bis 60 Gew-% eines oxidativ trocknenden, OH-funktionellen Triglycerids,
A2) 30 bis 55 Gew% 4,4'-Diisocyanato-dicyclohexylmethan,
A3) 3 bis 15 Gew-% eines oder mehrerer cycloaliphatischer Diole,
A4) 1 bis 20 Gew-% einer Verbindung mit mindestens einer gegenüber isocyanatreaktiven Gruppe und mindestens einer ionischen und/oder potentiell ionischen Funktion,
A5) 1 bis 20 Gew-% eines oder mehrerer Mono- Di- oder Triamine mit einem Molekulargewicht von weniger als 300g/mol,
A6) 0 bis 10 Gew-% eines Neutralisationsmittels zur Überführung einer ggf. vorhandenen potentiell ionischen Funktion der Komponente A4) in eine ionische Funktion und
A7) 0 bis 5 Gew-% eines Urethaniserungskatalysators
enthalten, dadurch gekennzeichnet, dass die Angabe in Gew-% bezogen ist auf die Gesamtmenge aller Aufbaukomponenten und die Summe aller Komponenten 100% nicht überschreitet.

In einer bevorzugten Ausführungsform der Erfindung besteht das Polyurethan A) aus den Aufbaukomponenten A1) bis A7). In diesem Fall beträgt die Summe aller Komponenten bezogen auf die Gesamtmenge der Aufbaukomponenten A1) bis A7) 100 %.

Erfindungsgemäß geeignete OH-funktionelle Triglyceride A1) sind dreifache Ester des Glycerins mit gleichen oder vorzugsweise verschiedenen Fettsäuren, die zumindest teilweise auch OH-Gruppen aufweisen. Als OH-Gruppen tragende Fettsäure kommt vorzugsweise Ricinolsäure in Frage, es ist aber auch denkbar, durch chemische Modifikation anderer Fettsäuren OH-Gruppen in das Triglycerid einzuführen.

Weiterhin können teilweise auch nicht OH-funktionelle Fettsäuren im Triglycerid A1) enthalten sein. Es kommen dabei sowohl Fettsäuren mittlerer Länge (6 bis 12 Kohlenstoffatome) als auch Fettsäuren großer Länge (14 bis 24 Kohlenstoffatome) in Frage. Geeignete Fettsäuren enthalten vorzugsweise auch eine oder mehrere Doppelbindungen, um die oxidative Trocknung des Polyurethan-Bindemittels zu gewährleisten. Beispiele für Fettsäuren mit einer Doppelbindung sind Undecylensäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure oder Nervonsäure. Beispiele für Fettsäuren mit zwei oder mehr Doppelbindungen sind Linolsäure, Alpha-Linolensäure, Gamma-Linolensäure, Calendulasäure, Punicinsäure, Alpha-Elaeostearinsäure, Beta-Elaeostearinsäure, Arachidonsäure, Timnodonsäure, Clupanodonsäure, Cervonsäure. In geringerer Menge können auch gesättigte Fettsäuren enthalten sein, wie zum Beispiel Laurinsäure, Myristinsäure, Palmitinsäure, Stearinsäure, Arachinsäure, Behensäure, Lignocerinsäure.

Bevorzugt enthalten die erfindungsgemäß einsetzbaren Triglyceride neben Ricinolsäure auch eine oder mehrere nicht-OH-funktionelle Fettsäuren, wie dehydratisierte Ricinolsäure, Ölsäure, Linolsäure, Linolensäure und in geringeren Mengen auch Palmitinsäure und/oder Stearinsäure. Die genaue Zusammensetzung ergibt sich aus der natürlichen Zusammensetzung der eingesetzten Pflanzenöle.

Grundsätzlich ist es möglich, Rizinusöl erfindungsgemäß als Komponente A1) einzusetzen. Allerdings ist bei natürlichem Rizinusöl die OH-Funktionalität zu hoch und die oxidative Trocknung ist nicht ausreichend. Daher sind verschiedene Verfahren vorgeschlagen worden, einerseits die OH-Funktionalität zu reduzieren und andererseits die Iodzahl (Doppelbindungsdichte) zu erhöhen.

Eine Möglichkeit besteht in der partiellen Dehydratisierung des Rizinusöls, wie es in der EP0709414 beschrieben ist.

Eine weitere, bevorzugte Möglichkeit ist die Umesterung einer Mischung aus Rizinusöl mit einem anderen Öl mit einer Iodzahl größer 50, bevorzugt größer 75 und besonders bevorzugt größer 100, wie sie in der EP1198487 beschrieben ist. Bevorzugt wird das OH-funktionelle Triglycerid durch Umesterung von Rizinusöl mit Sojaöl hergestellt.

Als Isocyanatkomponente A2) wird 4,4'-Diisocyanato-dicyclohexylmethan eingesetzt. Es können auch geringe Mengen (bis zu 10 Gew-% bezogen auf die Komponente A2)) anderer aliphatischer Diisocyanate mit eingesetzt werden. Beispiele für andere aliphatische Diisocyanate sind 1,6-Hexamethylendiisocyanat, 1-Isocyanato-3,3,5-trimethyl-5-isocyanatomethylcyclohexan (1-Isocyanato-3,3,5-trimethyl-5-isocyanomethyl-cyclohexan oder IPDI), 1,3-Bis(isocyanato-methyl)benzol (XDI), 1,3-Bis(1-isocyanato-1-methylethyl)-benzol (TMXDI), 1,5, Pentamethylendiisocyanat (PDI). Es ist aber bevorzugt, reines 4,4'-Diisocyanato-dicyclohexylmethan einzusetzen.

Erfindungswesentlich ist der Einsatz der niedermolekularen, cycloaliphatischen Diole A3) beim Aufbau des Präpolymers. Bevorzugt haben die niedermolekularen, cycloaliphatischen Diole ein Molekulargewicht von weniger als 500 g/mol, besonders bevorzugt eines von weniger als 200 g/mol.

Bevorzugte cycloaliphatische Diole sind ausgewählt aus der Gruppe bestehend aus 1,4-Cyclohexandiol, 1,2-Cyclohexandiol, 1,3-Cyclohexandiol, 1,4-Cyclohexandimethanol, 1,2-Cyclohexandimethanol, 1,4-Cyclohexendimethanol, Tricyclo[5.2.1.0]decandimethanol, Tricyclo[5.2.1.0]decandiol, hydriertem Bisphenol A (2,2-Bis(4-hydroxycyclohexyl)propan), und Isosorbid. Besonders bevorzugt ist die Verwendung von 1,4-Cyclohexandimethanol.

Die Komponente A4) umfasst Verbindungen mit mindestens einer gegenüber Isocyanat reaktiven Gruppe und zusätzlich mindestens einer ionischen und/oder potentiell ionischen Gruppe. Sie wirkt auf die erfindungsgemäßen Polyurethan(meth)acrylate hydrophilierend.

Zu den hydrophilierend wirkenden Gruppen gehören ionische Gruppen A41) und/oder ionische Gruppen, die aus potentiell ionischen Gruppen A42) hervorgehenden (beispielsweise durch Salzbildung), die anionischer Natur wie beispielsweise Carboxylat-, Sulfonat- oder Phosphonat-Gruppen oder kationischer Natur wie beispielsweise AmmoniumGruppen sein können und/oder potentiell ionische Gruppen A42), d.h. Gruppen, die beispielsweise durch Salzbildung in ionische Gruppen A41) überführt werden können. Sie werden durch isocyanatreaktive Gruppen in die Makromoleküle eingebaut. Bevorzugte isocyanatreaktive Gruppen sind Hydroxyl- und Aminogruppen.

Verbindungen enthaltend potentiell ionische Gruppen A42) umfassen Verbindungen mit potentiell anionischen Gruppen wie beispielsweise Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und/oder Verbindungen mit potentiell kationischen Gruppen wie beispielsweise Ethanolamin, Diethanolamin, Triethanolamin, 2-Propanolamin, Dipropanolamin, Tripropanolamin, N-Methylethanolamin, N-Methyl-diethanolamin und N,N-Dimethylethanolamin.

Bevorzugte Verbindungen enthalten potentiell anionische Gruppen A42) und sind ausgewählt aus der Gruppe bestehend aus Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder -butylsulfonsäure, 1,2- oder 1,3-Propylendiamin-ethylsulfonsäure, 3-(Cyclohexylamino)propan-1-sulfonsäure, Äpfelsäure, Zitronensäure, Glykolsäure, Milchsäure, Glycin, Alanin, Taurin, Lysin, 3,5-Diaminobenzoesäure, die Additionsprodukte von Acrylsäure an Diamine im Verhältnis 1:1, wie z. B. an Isophorondiamin (EP-A 916 647, Beispiel 1) oder an Ethylendiamin (PUD-Salz oder N-(2-Aminoethyl)-β-alanin), das Addukt von Natriumbisulfit an Buten-2-diol-1,4- Polyethersulfonat sowie das propoxylierte Addukt aus 2-Butendiol und NaHSO₃, wie in DE-A 2 446 440 auf Seite 5-9, Formel I-III beschrieben.

Besonders bevorzugte Verbindungen enthaltend potentiell ionische Gruppen A42) sind Dimethylolpropionsäure, Dimethylolbuttersäure und Hydroxypivalinsäure. Ganz besonders bevorzugt ist die Verwendung von Dimethylolpropionsäure

Die unter Komponente A42) genannten Säuren werden durch Umsetzung mit Neutralisationsmitteln, wie z. B. Triethylamin, Ethyldiisopropylamin, Dimethylcyclohexylamin, Dimethylethanolamin, Ammoniak, N-Ethylmorpholin, LiOH, NaOH und / oder KOH (Komponente A6) in die entsprechenden Salze überführt. Der Neutralisationsgrad liegt dabei bevorzugt zwischen 50 und 125%, besonders bevorzugt zwischen 60 und 100%. Der Neutralisationsgrad ist wie folgt definiert: Bei säurefunktionalisierten Polymeren als Quotient aus Base und Säure; bei basefunktionalisierten Polymeren als Quotient aus Säure und Base. Liegt der Neutralisationsgrad über 100%, so wird bei säurefunktionalisierten Polymeren mehr Base zugegeben als Säuregruppen im Polymer vorhanden sind; bei basefunktionalisierten Polymeren wird mehr Säure zugegeben als Basegruppen im Polymer vorhanden sind. Die Neutralisation der Komponente A42) erfolgt vorzugsweise durch LiOH, NaOH, KOH, Triethylenamin oder Ethyldiisopropylamin, besonders bevorzugt durch Triethylenamin oder Ethyldiisopropylamin und ganz besonders bevorzugt durch Ethyldiisopropylamin. In einer alternativer Ausführungsform der Erfindung, bei der aminfrei gearbeitet wird, ist es besonders bevorzugt, mit LiOH, NaOH oder KOH zu neutralisieren.

Die unter Komponente A4) aufgeführten Verbindungen können auch in Mischungen verwendet werden.

Zur Erhöhung des Gewichtsmittel des Molekulargewichts M_{w} der Polyurethanacrylate werden Mono- und Diamine und / oder mono- oder difunktionelle Aminoalkohole als Komponente A5) allein oder in Mischung verwendet. Bevorzugte Diamine sind solche, die gegenüber den Isocyanatgruppen reaktiver sind als Wasser, da die Verlängerung des Polyesterurethan(meth)acrylats gegebenenfalls im wässrigen Medium stattfindet. Besonders bevorzugt sind die Diamine ausgewählt aus der Gruppe von Ethylendiamin, 1,6-Hexamethylendiamin, Isophorondiamin, 1,3-Phenylendiamin, 1,4-Phenylendiamin, Piperazin, 4,4'-Diphenylmethandiamin, aminofunktionelle Polyethylenoxide, aminofunktionelle Polypropylenoxide (bekannt unter dem Namen Jeffamin® D-Reihe (Huntsman Corp. Europe, Zavantem, Belgien) und Hydrazin. Ganz besonders bevorzugt sind Isophorondiamin und Ethylendiamin und insbesondere bevorzugt ist die Mischung aus Isophorondiamin und Ethylendiamin.

Zur Beschleunigung der Reaktion ist es bevorzugt, Katalysatoren einzusetzen (Komponente A7). Dazu kommen dem Fachmann an sich bekannte Urethanisierungskatalysatoren wie z.B. tertiäre Amine oder Lewis-Säuren in Frage. Beispielhaft genannt seien Organozinnverbindungen, wie z.B. Dibutylzinndiacetat, Dibutylzinndilaurat, Dibutylzinnbis-acetoacetonat, Zinnsalze wie. Z.B. Zinnoctoat oder Zinkverbindungen, wie z.B. Zinkacetylacetonat oder Zinkoctoat. Ebenfalls denkbar ist der Einsatz von Lewis-sauren Metallverbindungen, die Molybdän, Vanadium, Zirkonium, Cäsium, Bismuth oder Wolfram enthalten, wie z.B. Bismuthoctoat oder Zirkoniumoctoat. Bevorzugt wird ein Katalysator eingesetzt, der keine metallorganische Verbindung ist, also keine kovalenten Metall-Kohlenstoff-Bindungen enthält. Besonders bevorzugt wird Zinnoctoat oder Bismuthoctoat eingesetzt.

Komponente A1) wird in Mengen von 40 bis 60 Gew.-%, bevorzugt von 42 bis 55 Gew.-%, besonders bevorzugt 45 bis 50 Gew.-%, Komponente A2) in Mengen von 30 bis 55 Gew.-%, bevorzugt von 33 bis 50 Gew.-%, besonders bevorzugt von 35 bis 42 Gew.-%, Komponente A3) in Mengen von 3 bis 15 Gew.-%, bevorzugt von 4 bis 10 Gew.-%, besonders bevorzugt von 5 bis 8 Gew.-%, Komponente A4) in Mengen von 1 bis 20 Gew.-%, bevorzugt von 1,5 bis 15 Gew.-%, ganz besonders bevorzugt von 2 bis 8 Gew.-%, Komponente A5) in Mengen von 1 bis 20 Gew.-%, bevorzugt von 1,5 bis 15 Gew.-%, besonders bevorzugt von 2 bis 10 Gew.-%, Komponente A6) in Mengen von 0 bis 10 Gew.-%, bevorzugt von 1 bis 5 Gew.-%, ganz besonders bevorzugt von 1,5 bis 5 Gew-% und Komponente A7) in Mengen von 0 bis 5 Gew.-%, bevorzugt von 0,001 bis 1 Gew.-%, ganz besonders bevorzugt von 0,001 bis 0,1 Gew-% eingesetzt.

Ein weiterer Gegenstand der Erfindung ist ein Verfahren zur Herstellung von Polyurethandispersionen, dadurch gekennzeichnet, dass in einem ersten Schritt durch Umsetzen der Komponenten A1) bis A4) ggf. in Anwesenheit eines Katalysators A7) und ggf. in einem Lösungsmittel in einem oder mehreren Reaktionsschritten ein Polyurethanpräpolymer erhalten wird, wobei ein Neutralisationsmittel A6) zur Erzeugung der für die Dispergierung notwendigen ionischen Gruppen vor, während oder nach der Herstellung des Additionsproduktes von A1) bis A4) zugegeben werden kann, gefolgt von einem Dispergierschritt durch Zugabe von Wasser zum Additionsprodukt von A1) bis A4) oder Überführen des Additionsproduktes von A1) bis A4) in eine wässrige Vorlage, wobei vor, während oder nach der Dispergierung eine Kettenverlängerung mittels Komponente A5) erfolgt und ggf. gefolgt von einem dritten Schritt bei dem die Dispersion durch Destillation von dem organischen Lösungsmittel befreit wird.

Ein weiterer Gegenstand der Erfindung sind daher auch Dispersionen, hergestellt nach dem vorstehenden Verfahren, die einen Festkörpergehalt von 25-60%, vorzugsweise von 30-50% und besonders bevorzugt von 35-45% und eine durchschnittliche Partikelgröße von 20 bis 300 nm, bevorzugt von 30 bis 200 nm aufweisen.

Die Umsetzung der isocyanathaltigen Komponenten A2) mit den isocyanatreaktiven Komponenten A1), A3) und A4) erfolgt in einer dem Fachmann an sich bekannten Urethanisierungsreaktion ggf. unter Zuhilfenahme eines Katalysators A7.

Dabei wird die isocyanathaltige Verbindungen A2) mit den isocyanatreaktiven Komponenten A1), A3) und A4) im Äquivalentverhältnis 1,6:1 bis 1,05:1, bevorzugt 1,5:1 bis 1,1:1 und besonders bevorzugt 1,4:1 bis 1,2:1 umgesetzt.

Die Umsetzung wird bei Temperaturen von 25 bis 100 °C, vorzugsweise 40 bis 80 °C über einen Zeitraum von 2 bis 30 Stunden, vorzugsweise 4 bis 15 Stunden durchgeführt.

Der Verlauf der Reaktion kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehalts, Messung des Brechungsindex, Messung des OH-Gehalts, Gaschromatographie (GC), kernmagnetische Resonanzspektroskopie (NMR), Infrarotspektroskopie (IR) und nahe Nahinfrarotspektroskopie (NIR). Bevorzugt ist die IR-Spektroskopie zur Kontrolle der vorhandenen freien NCO Gruppen (für aliphatische NCO-Gruppen liegt die Bande im IR-Spektrum bei ca. v = 2272 cm⁻¹) und GC-Untersuchungen auf nicht umgesetzte Verbindungen aus Komponente A2).

Die verbleibenden NCO-Gruppen werden mit dem Kettenverlängerungsamin (Komponente A5) ganz oder teilweise umgesetzt. Dabei wird der Anteil des Umsatzes der verbleibenden NCO-Gruppen als Kettenverlängerungsgrad bezeichnet. Bevorzugt ist dabei ein Kettenverlängerungsgrad von 50% bis 105%, besonders bevorzugt von 60 bis 95% und ganz besonders bevorzugt von 65% bis 80%. Es wird davon ausgegangen, dass die verbleibenden NCO-Gruppen im späteren Prozess mit Wasser abreagieren und so größtenteils zu einer Kettenverlängerung durch Harnstoffbildung führen.

Bevorzugt wird das erfindungsgemäße Verfahren in einem Rührreaktor durchgeführt.

Zur Herstellung der erfindungsgemäßen Dispersionen können sämtliche, aus dem Stand der Technik bekannte Verfahren wie Emulgator-Scherkraft, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der Organischen Chemie, Houben-Weyl, 4. Auflage, Band E20 / Teil 2 auf Seite 1682, Georg Thieme Verlag, Stuttgart, 1987. Bevorzugt sind das Schmelz-Emulgier- und das Aceton-Verfahren. Besonders bevorzugt wird das Aceton-Verfahren.

Im erfindungsgemäßen Verfahren können optional an beliebiger Stelle Lösemittel und/oder Reaktivverdünner eingesetzt werden.

Geeignete Lösemittel sind gegenüber den vorhandenen funktionellen Gruppen des Verfahrensprodukts vom Zeitpunkt der Zugabe bis zum Ende des Verfahrens inert. Geeignet sind z.B. in der Lacktechnik verwendete Lösemittel wie Kohlenwasserstoffe, Ketone und Ester, z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid. Bevorzugt wird ein wassermischbares Lösungsmittel eingesetzt, besonders bevorzugt wird Aceton eingesetzt.

Die erfindungsgemäßen Polyurethane A) und die damit hergestellten Dispersionen sind besonders gut als Bindemittel für Beschichtungsmittel geeignet. Deswegen betrifft eine weitere bevorzugte Ausführungsform der vorliegenden Erfindung die Verwendung des erfindungsgemäßen Polyurethans A) als Binder in einem Beschichtungsmittel. Bei besagtem Beschichtungsmittel handelt es sich besonders bevorzugt um ein einkomponentiges Beschichtungsmittel, d.h. ein Beschichtungsmittel, dem keine weitere Verbindung zugesetzt wird, die eine Vernetzung einzelner Moleküle des Polyurethans A) bewirkt. Weiterhin ist es bevorzugt, dass das Beschichtungsmittel wässrig ist.

Aufgrund der besonderen Eignung des erfindungsgemäßen Polyurethans A), bzw. der daraus hergestellten Dispersion als Bindemittel betrifft eine weitere bevorzugte Ausführungsform der vorliegenden Erfindung Beschichtungsmittel enthaltend wenigstens eine Polyurethandispersion enthaltend das Polyurethan A) und
B) gegebenenfalls weitere wässrige Bindemittel,
C) ein oder mehrere Sikkative
D) gegebenenfalls Lösemittel und/oder Wasser,
E) gegebenenfalls Hilfs- und Zusatzstoffe.

In einer besonders bevorzugten Ausführungsform der vorliegenden Erfindung enthält das erfindungsgemäße Beschichtungsmittel außer einem oder mehreren erfindungsgemäßen Polyurethanen A) kein weiteres Bindemittel.

In einer ganz besonders bevorzugten Ausführungsform der vorliegenden Erfindung besteht das erfindungsgemäße Beschichtungsmittel aus wenigstens einem Polyurethan A), einem Sikkativ C) und wenigstens einer weiteren Komponente ausgewählt aus der Gruppe bestehend aus den Komponenten B), D) und E).

Als Verbindungen der Komponente B) können andere wässrige Bindemittel verwendet werden, wie z.B. Polyacrylatdispersionen, Polyacrylatemulsionen, andere Alkyddispersionen, Polyurethan-Polyacrylatdispersionen, Polyurethandispersionen, wässrige Expoxid-Harze oder auch Vernetzerdispersionen, wie z.B. Polyisocyanate, die optional auch hydrophilierend wirkende Gruppen eingebaut haben können und freie oder blockierte Isocyanatgruppen enthalten, Polyaziridine oder Aminvernetzer, die z.B. auf Melamin basieren können.

Zur Beschleunigung der oxidativen Trocknung werden ein oder mehrere Sikkative (Komponente C) zugesetzt. Wirksame Sikkative sind Oxide, Salze oder Komplexe von Metallen wie z.B. Kobalt, Vanadium, Mangan, Kupfer, Eisen, Zirkonium, Kalzium oder Zink.

Als Komponente D) können optional neben Wasser auch organische Lösungsmittel mit verwendet werden. Beispielhaft genannt seien verschiedene Esteralkohole, Ester, Glykolether oder Glykolbenzoate wie z.B. Ethylenglykol, Propylenglykol, Butylglykol, Butyldiglykol, Propylenglykol-n-butylether (PnB), Dipropylenglykol-monobutylether (DPnB), Dipropylenglykol-monomethylether (DPM), 2,2,4-Trimethyl-1,3-pentandiol-monoisobutyrat (Texanol), Triethylenglycol-di-2-ethylhexanoat (TEGDO), 2-Ethylhexyl benzoate (2-EHB) oder Diethyleneglykol-dibenzoat (DEGDB).

Als Hilfs- und Zusatzstoffe (Komponente E) können zur Erhöhung der Wetterstabilität der gehärteten Lackschicht auch UV-Absorber und/oder HALS-Stabilisatoren enthalten sein. Bevorzugt ist eine Kombination von UV-Absorbenr und HALS-Stabilisatoren. Erstere weisen vorteilhaft einen Absorptionsbereich von maximal 390 nm auf, beispielsweise UV-Absorber wie Triphenyltriazintypen (z.B. Tinuvin® 400 (Ciba Spezialitätenchemie GmbH, Lampertheim, DE)), Benztriazole (z.B. Tinuvin® 622 (Ciba Spezialitätenchemie GmbH, Lampertheim, DE)) oder Oxalsäuredianilide (z. B. Sanduvor® 3206 (Clariant, Muttenz, CH))) und werden in 0,5 - 3,5 Gew.-% bezogen auf Festharz zugegeben. Geeignete HALS-Stabilisatoren sind kommerziell erhältlich (z.B. Tinuvin® 292 oder Tinuvin® 123 (Ciba Spezialitätenchemie GmbH, Lampertheim, DE) oder Sanduvor® 3258 (Clariant, Muttenz, CH)). Bevorzugte Mengen sind 0,5-2,5 Gew.-% bezogen auf Festharz.

Ebenfalls können in E) weitere in der Lacktechnologie bekannte Hilfs- und Zusatzstoffe wie z.B. Pigmente einschließlich Metallic-Effektpigmente, Farbstoffe, Mattierungsmittel, Füllstoffe, Verlaufs-, Benetzungs- und Entlüftungsadditive, Slip-Additive, Nanopartikel, Anti-Vergilbungsadditive, Verdicker und Additive zur Reduktion der Oberflächenspannung enthalten sein.

Das Auftragen der erfindungsgemäßen Beschichtungsmittel auf das zu beschichtende Material erfolgt mit den in der Beschichtungstechnologie üblichen und bekannten Methoden wie Spritzen, Rakeln, Walzen, Gießen, Tauchen, Schleudern, Streichen oder Sprühen oder durch Druck-Techniken wie Sieb-, Tief-, Flexo- oder Offsetdruck sowie durch Transfer-Methoden.

Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, und UP (Kurzbezeichnungen nach DIN 7728T1), Papier, Leder, Textilien, Filz, Glas, Holzwerkstoffe, Kork, anorganisch gebundene Substrate wie Holz- und Faserzementplatten, elektronische Baugruppen oder mineralische Untergründe. Es können auch Substrate, die aus verschiedenen der vorgenannten Materialien bestehen, oder bereits beschichtete Substrate wie Fahrzeuge, Flugzeuge oder Schiffe sowie deren Teile, insbesondere Karosserien oder Anbauteile lackiert werden. Es ist auch möglich die Beschichtungsmittel nur temporär auf ein Substrat aufzubringen, dann teilweise oder vollständig zu härten und gegebenenfalls wieder abzulösen, um z.B. Folien herzustellen.

Besonders eignen sich die erfindungsgemäßen Beschichtungsmittel zur Beschichtung von Holz, holzhaltigen Substraten, Kork und Cellulosefaser-haltigen Substraten, wie Papier oder Pappe. Ganz besonders geeignet sind die erfindungsgemäßen Beschichtungsmittel zur Beschichtung von Holz.

Zur Aushärtung können durch Ablüften z.B. enthaltenes Wasser oder gegebenenfalls Lösemittel ganz oder teilweise entfernt werden.

Während des Ablüftens oder im Anschluss kann thermisch ausgehärtet werden.

Falls notwendig kann die thermische Härtung bei Raumtemperatur aber auch bei erhöhter Temperatur, vorzugsweise bei 0 - 160 °C, bevorzugt bei 10 - 60 °C, besonders bevorzugt bei 15 - 35 °C erfolgen.

Die applizierten Schichtdicken (vor der Härtung) liegen typischerweise zwischen 0,5 und 5000 µm, bevorzugt zwischen 5 und 1000 µm, besonders bevorzugt zwischen 15 und 200 µm. Bei Verwendung von Lösungsmitteln wird dieses nach der Applikation und vor der Härtung durch die gängigen Methoden entfernt.

Ein weiterer Gegenstand der Erfindung sind Substrate beschichtet mit den erfindungsgemäßen Beschichtungsmitteln, die die erfindungsgemäßen Polyurethandispersionen enthalten.

### Beispiele

Alle Prozentangaben beziehen sich sofern nicht abweichend angegeben auf Gewichtsprozent.

Der Feststoffgehalt der Polyurethandispersion wurde gravimetrisch nach Abdampfen aller nichtflüchtigen Bestandteile gemäß DIN EN ISO 3251 bestimmt.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die mittlere Teilchengröße wurde durch Laser-Korrelationsspektroskopie ermittelt.

Die Auslaufzeit wurde gemäß DIN 53211 mit Hilfe des 4 mm DIN-Bechers bestimmt.

Die OH-Zahl wurde gemäß DIN 53240-2 bestimmt.

Die Säure-Zahl wurde gemäß DIN EN ISO 2114 bestimmt.

### OH-funktionelles Triglycerid (Komponente A1)

In einem 5 1-Reaktor mit Destillationsaufsatz wurden 3200 g Rizinusöl und 1600 g Sojaöl sowie 2,4 g Lithiumhydroxid eingewogen. Ein Stickstoffstrom (5 l/h) wurde durch die Reaktanden geleitet. Innerhalb von 140 min wurde auf 240 °C aufgeheizt. Nach 7 h bei 240 °C wurde abgekühlt. OH-Zahl: 109 mg KOH/g Substanz, Säurezahl: 3,2 mg KOH/g Substanz, Iodzahl: 97 mg I₂/100 g Substanz.

### Beispiel 1: erfindungsgemäße wässrige Polyurethandispersion

In einem 2000 ml-Vierhals-Glaskolben mit Rückflusskühler, beheizbarem Ölbad, mechanischem Rührer, und Innenthermometer wurden 195,5 g OH-funktionelles Triglycerid (Komponente A1), 26,2 g 1,4-Cyclohexandimethanol (Komponente A3), 12,9 g Dimethylolpropionsäure (Komponente A4) und 165,7 g 4,4'-Diisocyanato-dicyclohexylmethan (Desmodur® W, Covestro Deutschland AG, Leverkusen, Komponente A2) in 91 g Aceton vorgelegt, mit 14mg Zinnoctoat versetzt, auf 60°C aufgeheizt und ca.8 h bis zum Erreichen des theoretischen NCO-Gehaltes von 2,98 % gerührt. Es wurde dann mit weiteren 286 g Aceton verdünnt, auf 30°C abgekühlt und durch Zugabe von 10,96 g Ethyldiisopropylamin neutralisiert. Es wurde 15 min nachgerührt und dann eine Mischung aus 3,48 g Ethylendiamin und 9,85 g Isophorondiamin (Komponente A5), gelöst in 77 g Wasser, langsam zugetropft. Zur Dispergierung wurden in die zunächst klare Lösung in 643 g Wasser eingetragen. Abschließend wurde das Aceton unter leichtem Vakuum aus der Dispersion abdestilliert. Es wurde eine wässrige Polyurethandispersion mit einem Feststoffgehalt von 36,1 Gew.-%, einer Auslaufzeit von 17 sec, einer mittleren Teilchengröße von 103 nm und einem pH-Wert von 7,4 erhalten.

### Beispiel 2: nicht erfindungsgemäße wässrige Polyurethandispersion (lineare statt cyclische Diole)

In einem 2000 ml-Vierhals-Glaskolben mit Rückflusskühler, beheizbarem Ölbad, mechanischem Rührer, und Innenthermometer wurden 171,6 g OH-funktionelles Triglycerid (Komponente A1), 14,1 g 1,6-Hexandiol sowie 10,7 g 1,4-Butandiol (analog Komponente A3), 14,2g Dimethylolpropionsäure (Komponente A4) und 182,0 g 4,4'-Diisocyanato-dicyclohexylmethan (Desmodur® W, Covestro Deutschland AG, Leverkusen, Komponente A2) in 99,7 g Aceton vorgelegt, mit 16 mg Zinnoctoat versetzt, auf 60°C aufgeheizt und ca.8 h bis zum Erreichen des theoretischen NCO-Gehaltes von 3,25 % gerührt. Es wurde dann mit weiteren 314 g Aceton verdünnt, auf 30°C abgekühlt und durch Zugabe von 12,03 g Ethyldiisopropylamin neutralisiert. Es wurde 15 min nachgerührt und dann eine Mischung aus 3,82 g Ethylendiamin und 10,81 g Isophorondiamin (Komponente A5), gelöst in 60 g Wasser, langsam zugetropft. Zur Dispergierung wurden in die zunächst klare Lösung in 707 g Wasser eingetragen. Abschließend wurde das Aceton unter leichtem Vakuum aus der Dispersion abdestilliert. Es wurde eine wässrige Polyurethandispersion mit einem Feststoffgehalt von 34,8 Gew.-%, einer Auslaufzeit von 14 sec, einer mittleren Teilchengröße von 64 nm und einem pH-Wert von 7,3 erhalten.

### Beispiel 3: nicht erfindungsgemäße wässrige Polyurethandispersion (IPDI statt 4,4'-Diisocyanatodicyclohexylmethan)

In einem 2000 ml-Vierhals-Glaskolben mit Rückflusskühler, beheizbarem Ölbad, mechanischem Rührer, und Innenthermometer wurden 185,9 g OH-funktionelles Triglycerid (Komponente A1), 23,3 g 1,4-Butandiol (analog Komponente A3), 15,4 g Dimethylolpropionsäure (Komponente A4) und 166,5 g Isophorondiisocyanat (Desmodur® I, Covestro Deutschland AG, Leverkusen, analog Komponente A2) in 108 g Aceton vorgelegt, mit 17 mg Zinnoctoat versetzt, auf 60°C aufgeheizt und ca. 8 h bis zum Erreichen des theoretischen NCO-Gehaltes von 3,5 % gerührt. Es wurde dann mit weiteren 343 g Aceton verdünnt, auf 30°C abgekühlt und durch Zugabe von 12,60 g Ethyldiisopropylamin neutralisiert. Es wurde 15 min nachgerührt und dann eine Mischung aus 4,14 g Ethylendiamin und 11,72 g Isophorondiamin (Komponente A5), gelöst in 65 g Wasser, langsam zugetropft. Zur Dispergierung wurden in die zunächst klare Lösung in 663 g Wasser eingetragen. Abschließend wurde das Aceton unter leichtem Vakuum aus der Dispersion abdestilliert. Es wurde eine wässrige Polyurethandispersion mit einem Feststoffgehalt von 35,8 Gew.-%, einer Auslaufzeit von 13 sec, einer mittleren Teilchengröße von 140 nm und einem pH-Wert von 7,16 erhalten.

### Lackformulierung und anwendungstechnische Prüfung

Die hergestellten Polyurethandispersionen wurden unter Scherung im Dispergator bei 1500 Umdrehungen/min nacheinander gemäß Tabelle 1 mit den Formulierungsbestandteilen vermengt. Der resultierende Lack wurde dreimal mit einem Pinsel in dünner Schicht auf eine Eichenholzplatte aufgetragen, jeweils etwa 3h abgelüftet und die ersten beiden Schichten anschließend mit Schleifpapier (P180) angeschliffen.

**Tabelle 1: Formulierung der Dispersionen**

| Komponente | Funktion | Menge (Gew.-Teile auf 100 Teile) |
|---|---|---|
| Dispersion gemäß Beispiel 1,2,3 | Bindemittel | 91,2 |
| Byk® 208, Altana AG, Deutschland | Entschäumer | 1,0 |
| Byk® 342, Altana AG, Deutschland | Oberflächenadditiv | 0,4 |
| Byk® 349, Altana AG, Deutschland | Oberflächenadditiv | 0,2 |
| Butyldiglykol / Propylenglykol-n-butylether 1:1 (Gewichtsanteile) | Ko-Lösemittel | 6,8 |
| Wasser | | 0,1 |
| Borchi Oxy Coat® 101, OMG Borchers GmbH, Deutschland | Sikkativ | 0,3 |
| Tafigel® Pur 45, Münzing Chemie GmbH, Deutschland | Verdickungsmittel | 0,1 |

Die Glanzmessung und die Bestimmung des Haze wurden mit dem Haze Gloss Meter 4601 von BYK Gardner, nach DIN 67530 durchgeführt.

Die Pendelhärte nach König wurde gemäß DIN EN ISO 1522 geprüft.

Die Prüfung gegen Chemikalien, wie Wasser oder 48%iges Ethanol, erfolgte gemäß DIN 68861-1 und DIN EN 12720 auf einer Eichenholzplatte. (Note 5: Lack bleibt unverändert, Note 1: starke Veränderung der Oberfläche, z.B. Lösen des Lackes)

Die Absatzstrichbeständigkeit wurde durch schlagartiges Verletzen der Filmoberfläche mit einer handelsüblichen Reparatur-Schuhsohle bestimmt. Die Schuhsole wird dazu in eine pendelartige Apparatur eingespannt, ausgelenkt und über die beschichtete Holzplatte geschwungen. Das Maß der Beschädigung (nach Entfernung des Gummiabriebs) wurde in einer Skala von 1 bis 5 beurteilt, wobei (ähnlich wie bei der Chemikalienresistenz) 1 eine vollständige Zerstörung des Films bedeutet und 5 für einen völlig unbeschädigten Film steht.

**Tabelle 2: Prüfergebnisse auf Eichenholz**

| Beispiele | **1 erfindungsgemäß** | **2 (Vergleich)** | **3 (Vergleich)** | **PUR-Dispersion 1 aus** EP1198487B **gemäß [0050]*** |
|---|---|---|---|---|
| Glanz 20° | 64 | 16 | 71 | keine Angabe |
| Glanz 60° | 83 | 53 | 88 | keine Angabe |
| Haze | 105 | 397 | 148 | keine Angabe |
| Pendeldämpfung 7d 23°C [s] | 69 | 80 | 69 | keine Angabe |
| Wasserfestigkeit 24h - sofort | 5 | 5 | 5 | 5 |
| Wasserfestigkeit 24h - nach recovery | 5 | 5 | 5 | keine Angabe |
| Wasserfestigkeit 24h - Kratzbeständigkeit | 5 | 5 | 5 | keine Angabe |
| Ethanolbeständigkeit 5min - sofort | 5 | 4 | 3 | 3 |
| Ethanolbeständigkeit 5min - nach recovery | 5 | 5 | 5 | keine Angabe |
| Ethanolbeständigkeit 5min - Kratzbeständigkeit | 5 | 3,5 | 3 | keine Angabe |
| Ethanolbeständigkeit 30min - sofort | 3 | 3 | 3 | 2 |
| Ethanolbeständigkeit 30min - nach recovery | 5 | 5 | 4,5 | keine Angabe |
| Ethanolbeständigkeit 30min - Kratzbeständigkeit | 5 | 3 | 3 | keine Angabe |
| Absatzstrichbeständigkeit 15d | 4,5 | 4 | 1,5 | 4 |

| | | | | |
|---|---|---|---|---|
| ^{(*)} Die Werte wurden in der EP1198487 in einer anderen Skala gemessen und in dieser Tabelle zum besseren Vergleich in die hier verwendete DIN-Skala übertragen. | | | | |

Aus der Beschreibung der EP1198487 wurde hier zu Vergleichszwecken die Beständigkeit der PUR-Dispersion 1 eingefügt, die nur eine mäßige Chemikalienresistenz gegen Ethanol aufweist. Die Erhöhung des Gehaltes an OH-funktionellen Triglycerids in allen drei Beispielen führt jeweils zu einer besseren Chemikalienresistenz, wobei der Effekt bei der Isophorondiisocyanat -basierten Dispersion (Beispiel 3) nicht besonders ausgeprägt ist und hier auch eine deutlich verschlechterte Absatzstrichbeständigkeit zu beobachten ist. Dieses Problem wird durch die Verwendung von 4,4'-Diisocyanato-dicyclohexylmethan als Isocyanat gelöst. Allerdings tritt dann, wie in Beispiel 2 gezeigt, eine deutliche Trübung und ein Glanzverlust zutage. Erst durch die Verwendung eines zyklischen Diols kann dieser Effekt verhindert werden und es werden nochmals verbesserte Resistenzen beobachtet.

## Patentansprüche

1. Polyurethan A), das mindestens als Aufbaukomponenten
A1) 40 bis 60 Gew-% eines oxidativ trocknenden, OH-funktionellen Triglycerids,
A2) 30 bis 55 Gew% 4,4'-Diisocyanato-dicyclohexylmethan,
A3) 3 bis 15 Gew-% eines oder mehrerer cycloaliphatischer Diole,
A4) 1 bis 20 Gew-% einer Verbindung mit mindestens einer gegenüber Isocyanat reaktiven Gruppe und mindestens einer ionischen und/oder potentiell ionischen Funktion,
A5) 1 bis 20 Gew-% eines oder mehrerer Mono- Di- oder Triamine mit einem Molekulargewicht von weniger als 300g/mol,
A6) 0 bis 10 Gew-% eines Neutralisationsmittels zur Überführung einer ggf. vorhandenen potentiell ionischen Funktion der Komponente A4) in eine ionische Funktion und
A7) 0 bis 5 Gew-% eines Urethanisierungskatalysators
enthält, **dadurch gekennzeichnet, dass** die Angabe in Gew-% bezogen ist auf die Gesamtmenge aller Aufbaukomponenten und die Summe aller Komponenten 100% nicht überschreitet.

2. Polyurethan gemäß Anspruch 1, **dadurch gekennzeichnet, dass** als Komponente A1) ein OH-funktionelles Triglycerid eingesetzt wird, welches durch Umesterung von Rizinusöl mit Sojaöl oder durch Dehydratisierung von Rizinusöl hergestellt wurde.

3. Polyurethan gemäß Anspruch 1 oder 2, **dadurch gekennzeichnet, dass** als Komponente A3) Cyclohexandimethanol verwendet wird.

4. Polyurethan gemäß einem der Ansprüche 1 bis 3, **dadurch gekennzeichnet, dass** als Komponente A4) Dimethylolpropionsäure verwendet wird.

5. Polyurethan gemäß einem der Ansprüche 1 bis 4, **dadurch gekennzeichnet, dass** als Komponente A5) ein Diamin verwendet wird.

6. Polyurethan gemäß einem der Ansprüche 1 bis 5, **dadurch gekennzeichnet, dass** als Komponente A5) eine Mischung aus Ethylendiamin und Isophorondiamin verwendet wird.

7. Polyurethan gemäß einem der Ansprüche 1 bis 6, **dadurch gekennzeichnet, dass** als Komponente A6) Triethylamin oder Ethyldiisopropylamin verwendet wird.

8. Polyurethan gemäß einem der Ansprüche 1 bis 6, **dadurch gekennzeichnet, dass** als Komponente A6) Lithiumhydroxid, Natriumhydroxid oder Kaliumhydroxid verwendet wird.

9. Polyurethan gemäß einem der Ansprüche 1 bis 8, **dadurch gekennzeichnet, dass** als Komponente A7) keine metallorganische Verbindung eingesetzt wird.

10. Polyurethan nach einem der Ansprüche 1 bis 9, **dadurch gekennzeichnet, dass** es ausschließlich aus den Aufbaukomponenten A1) bis A7) besteht.

11. Verfahren zur Herstellung von Polyurethandispersionen enthaltend ein Polyurethan nach einem der Ansprüche 1 bis 10, **dadurch gekennzeichnet, dass** in einem ersten Schritt durch Umsetzen der Komponenten A1) bis A4) in einem oder mehreren Reaktionsschritten ein Polyurethanpräpolymer erhalten wird, wobei ein Neutralisationsmittel A6) zur Erzeugung der für die Dispergierung notwendigen ionischen Gruppen vor, während oder nach der Herstellung des Additionsproduktes von A1) bis A4) zugegeben wird, gefolgt von einem Dispergierschritt durch Zugabe von Wasser zum Additionsprodukt von A1) bis A4) oder Überführen des Additionsproduktes von A1) bis A4) in eine wässrige Vorlage, wobei vor, während oder nach der Dispergierung eine Kettenverlängerung mittels Komponente A5) erfolgt und gefolgt von einem dritten Schritt bei dem die Dispersion durch Destillation von dem organischen Lösungsmittel befreit wird.

12. Polyurethandispersion erhältlich gemäß dem Verfahren aus Anspruch 11, **dadurch gekennzeichnet, dass** der Festkörpergehalt in Wasser 25-60 Gew-% beträgt.

13. Beschichtungsmittel enthaltend wenigstens eine Polyurethandispersion gemäß Anspruch 12 und
B) gegebenenfalls weitere wässrige Bindemittel,
C) ein oder mehrere Sikkative
D) gegebenenfalls Lösemittel und/oder Wasser,
E) gegebenenfalls Hilfs- und Zusatzstoffe.

14. Verwendung der Beschichtungsmittel gemäß Anspruch 13 zur Herstellung von Beschichtungen von Holz, holzartigen Substraten, Kork und Cellulosefaser-haltigen Substraten.

15. Substrate beschichtet mit den Beschichtungsmitteln gemäß Anspruch 13.

## Claims

1. Polyurethane A), which comprises at least as synthesis components
A1) 40 to 60 wt% of an oxidatively drying, OH-functional triglyceride,
A2) 30 to 55 wt% of 4,4'-diisocyanato-dicyclohexylmethane,
A3) 3 to 15 wt% of one or more cycloaliphatic diols,
A4) 1 to 20 wt% of a compound having at least one isocyanate-reactive group and at least one ionic and/or potentially ionic function,
A5) 1 to 20 wt% of one or more mono-, di- or triamines having a molecular weight of less than 300 g/mol,
A6) 0 to 10 wt% of a neutralizing agent for converting a potentially ionic function, where present, of component A4) into an ionic function, and
A7) 0 to 5 wt% of a urethanization catalyst,
**characterized in that** the figure in wt% is based on the total amount of all synthesis components, and the sum total of all the components does not exceed 100%.

2. Polyurethane according to Claim 1, **characterized in that** component A1) used comprises an OH-functional triglyceride prepared by transesterification of castor oil with soybean oil or by dehydration of castor oil.

3. Polyurethane according to Claim 1 or 2, **characterized in that** component A3) used comprises cyclohexanedimethanol.

4. Polyurethane according to any of Claims 1 to 3, **characterized in that** component A4) used comprises dimethylolpropionic acid.

5. Polyurethane according to any of Claims 1 to 4, **characterized in that** component A5) used comprises a diamine.

6. Polyurethane according to any of Claims 1 to 5, **characterized in that** component A5) used comprises a mixture of ethylenediamine and isophoronediamine.

7. Polyurethane according to any of Claims 1 to 6, **characterized in that** component A6) used comprises triethylamine or ethyldiisopropylamine.

8. Polyurethane according to any of Claims 1 to 6, **characterized in that** component A6) used comprises lithium hydroxide, sodium hydroxide or potassium hydroxide.

9. Polyurethane according to any of Claims 1 to 8, **characterized in that** component A7) used comprises no organometallic compound.

10. Polyurethane according to any of Claims 1 to 9, **characterized in that** it consists exclusively of the synthesis components A1) to A7).

11. Process for preparing polyurethane dispersions comprising a polyurethane according to any of Claims 1 to 10, **characterized in that** in a first step a polyurethane prepolymer is obtained by reaction of components A1) to A4) in one or more reaction steps, with a neutralizing agent A6) for generating the ionic groups necessary for dispersal being added before, during or after the preparation of the adduct from A1) to A4), followed by a dispersing step by addition of water to the adduct of A1) to A4) or transfer of the adduct of A1) to A4) into an aqueous initial charge, with chain extension by means of component A5) taking place before, during or after the dispersing, and followed by a third step wherein the dispersion is freed from the organic solvent by distillation.

12. Polyurethane dispersion obtainable by the process from Claim 11, **characterized in that** the solids content in water is 25-60 wt%.

13. Coating compositions comprising at least one polyurethane dispersion according to Claim 12 and
B) optionally further aqueous binders,
C) one or more siccatives,
D) optionally solvents and/or water,
E) optionally auxiliaries and adjuvants.

14. Use of the coating compositions according to Claim 13 for producing coatings on wood, wood-like substrates, cork and cellulose fibre-containing substrates.

15. Substrates coated with the coating compositions according to Claim 13.

## Revendications

1. Polyuréthane A), qui contient au moins les composants constitutifs suivants :
A1) 40 à 60 % en poids d'un triglycéride à fonction OH, séchant par oxydation,
A2) 30 à 55 % en poids de 4,4'-diisocyanato-dicyclohexylméthane,
A3) 3 à 15 % en poids d'un ou de plusieurs diols cycloaliphatiques,
A4) 1 à 20 % en poids d'un composé contenant au moins un groupe réactif avec les isocyanates et au moins une fonction ionique et/ou potentiellement ionique,
A5) 1 à 20 % en poids d'une ou de plusieurs mono-, di- ou triamines ayant un poids moléculaire inférieur à 300 g/mol,
A6) 0 à 10 % en poids d'un agent de neutralisation pour le transfert d'une fonction potentiellement ionique éventuellement présente selon le composant A4) en une fonction ionique, et
A7) 0 à 5 % en poids d'un catalyseur d'uréthanisation,
**caractérisé en ce que** les indications en % en poids se rapportent à la quantité totale de tous les composants constitutifs et la somme de tous les composants ne dépasse pas 100 %.

2. Polyuréthane selon la revendication 1, **caractérisé en ce qu'**un triglycéride à fonction OH qui a été fabriqué par transestérification d'huile de ricin avec de l'huile de soja ou par déshydratation d'huile de ricin est utilisé en tant que composant A1).

3. Polyuréthane selon la revendication 1 ou 2, **caractérisé en ce que** du cyclohexane-diméthanol est utilisé en tant que composant A3).

4. Polyuréthane selon l'une quelconque des revendications 1 à 3, **caractérisé en ce que** de l'acide diméthylolpropionique est utilisé en tant que composant A4).

5. Polyuréthane selon l'une quelconque des revendications 1 à 4, **caractérisé en ce qu'**une diamine est utilisée en tant que composant A5).

6. Polyuréthane selon l'une quelconque des revendications 1 à 5, **caractérisé en ce qu'**un mélange d'éthylène-diamine et d'isophorone-diamine est utilisé en tant que composant A5).

7. Polyuréthane selon l'une quelconque des revendications 1 à 6, **caractérisé en ce que** de la triéthylamine ou de l'éthyldiisopropylamine est utilisée en tant que composant A6).

8. Polyuréthane selon l'une quelconque des revendications 1 à 6, **caractérisé en ce que** de l'hydroxyde de lithium, de l'hydroxyde de sodium ou de l'hydroxyde de potassium est utilisé en tant que composant A6).

9. Polyuréthane selon l'une quelconque des revendications 1 à 8, **caractérisé en ce qu'**aucun composé métallo-organique n'est utilisé en tant que composant A7).

10. Polyuréthane selon l'une quelconque des revendications 1 à 9, **caractérisé en ce qu'**il est exclusivement constitué par les composants constitutifs A1) à A7).

11. Procédé de fabrication de dispersions de polyuréthane contenant un polyuréthane selon l'une quelconque des revendications 1 à 10, **caractérisé en ce qu'**un prépolymère de polyuréthane est obtenu lors d'une première étape par mise en réaction des composants A1) à A4) en une ou plusieurs étapes de réaction, un agent de neutralisation A6) étant ajouté pour la formation des groupes ioniques nécessaires pour la dispersion avant, pendant ou après la fabrication du produit d'addition de A1) à A4), suivie par une étape de dispersion par ajout d'eau au produit d'addition de A1) à A4) ou transfert du produit d'addition de A1) à A4) dans une préparation aqueuse, un allongement de chaîne au moyen du composant A5) ayant lieu avant, pendant ou après la dispersion, et suivie par une troisième étape lors de laquelle la dispersion est débarrassée du solvant organique par distillation.

12. Dispersion de polyuréthane pouvant être obtenue par le procédé selon la revendication 11, **caractérisée en ce que** la teneur en solides dans l'eau est de 25 à 60 % en poids.

13. Agents de revêtement contenant au moins une dispersion de polyuréthane selon la revendication 12, et
B) éventuellement d'autres liants aqueux,
C) un ou plusieurs agents siccatifs,
D) éventuellement un solvant et/ou de l'eau,
E) éventuellement des adjuvants et additifs.

14. Utilisation des agents de revêtement selon la revendication 13 pour la fabrication de revêtements de bois, de substrats de type bois, de liège et de substrats contenant des fibres de cellulose.

15. Substrats revêtus avec les agents de revêtement selon la revendication 13.
